# FASCICULE DE BREVET EUROPEEN

(11) **EP 4 026 767 B1**
(45) Date de publication et mention de la délivrance du brevet: **26.06.2024**
(21) Numéro de dépôt: 21211934.1
(22) Date de dépôt: 02.12.2021
(51) Int. Cl.: B64C 1/10, B64C 1/18, B64C 25/04, B64C 1/26, B64C 25/12

(54) **AÉRONEF COMPRENANT UNE CASE DE TRAIN D'ATTERRISSAGE PRINCIPALE RENFORCÉE**
LUFTFAHRZEUG MIT EINEM VERSTÄRKTEN HAUPTFAHRWERKSKASTEN
AIRCRAFT INCLUDING A MAIN LANDING GEAR REINFORCED BOX

(30) Priorité: 12.01.2021 FR 2100260
(43) Date de publication de la demande: 13.07.2022
(73) Titulaire: Airbus Operations SAS, 31060 Toulouse (FR)
(72) Inventeur: ORTEU, Benoit, 31060 Toulouse (FR); SIRE, Damien, 31060 Toulouse (FR)
(74) Mandataire: Fantin, Laurent

(56) Documents cités:
- EP-A1- 3 725 674
- US-A1- 2012 138 746

## Description

La présente demande se rapporte à un aéronef comprenant une case de train d'atterrissage principale renforcée.

Le document US 2012 138746 décrit une structure d'aéronef ayant des poutres longitudinales formant des longerons latéraux fixés à un panneau supérieure, un caisson centrale de voilure, des cases pour loger des train d'atterrissage aussi que des poutres de renfort reliant les longerons latéraux au caisson central.

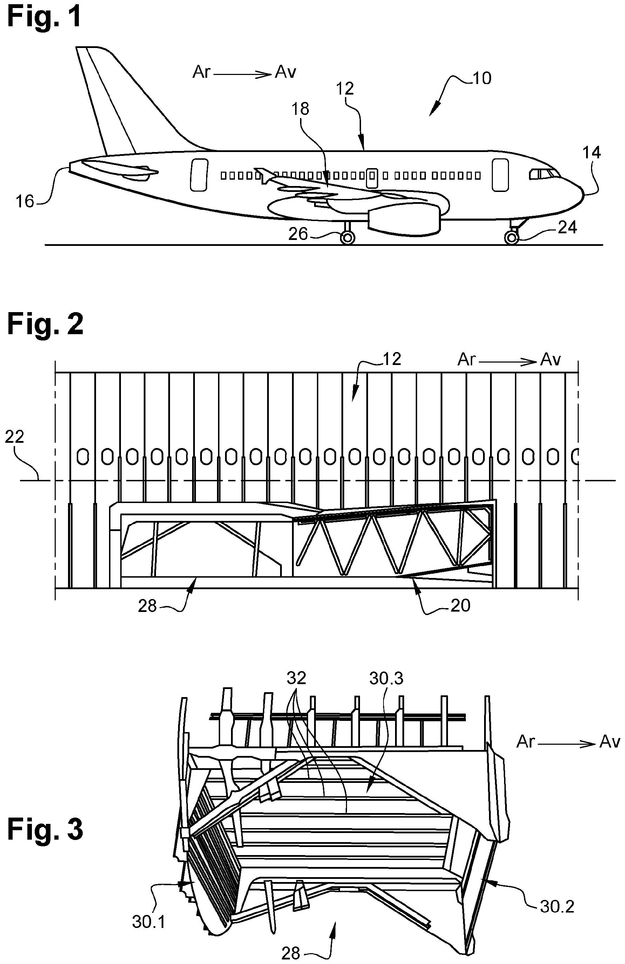

Comme illustré sur les figures 1 et 2, un aéronef 10 comprend un fuselage 12 qui s'étend entre une pointe avant 14 et une pointe arrière 16, ainsi que des ailes 18 disposées de part et d'autre du fuselage 12 et reliées à ce dernier par un caisson central de voilure 20.

Pour la suite de la description, un axe longitudinal 22 de l'aéronef 10 correspond à l'axe horizontal, lorsque l'aéronef 10 est au sol, qui s'étend de la pointe avant 14 à la pointe arrière 16 de l'aéronef 10. Une direction longitudinale est une direction parallèle à l'axe longitudinal 22. Un plan longitudinal est un plan qui est parallèle à l'axe longitudinal 22. Un plan médian vertical est un plan vertical passant par l'axe longitudinal 22. Un plan transversal est un plan perpendiculaire à l'axe longitudinal 22.

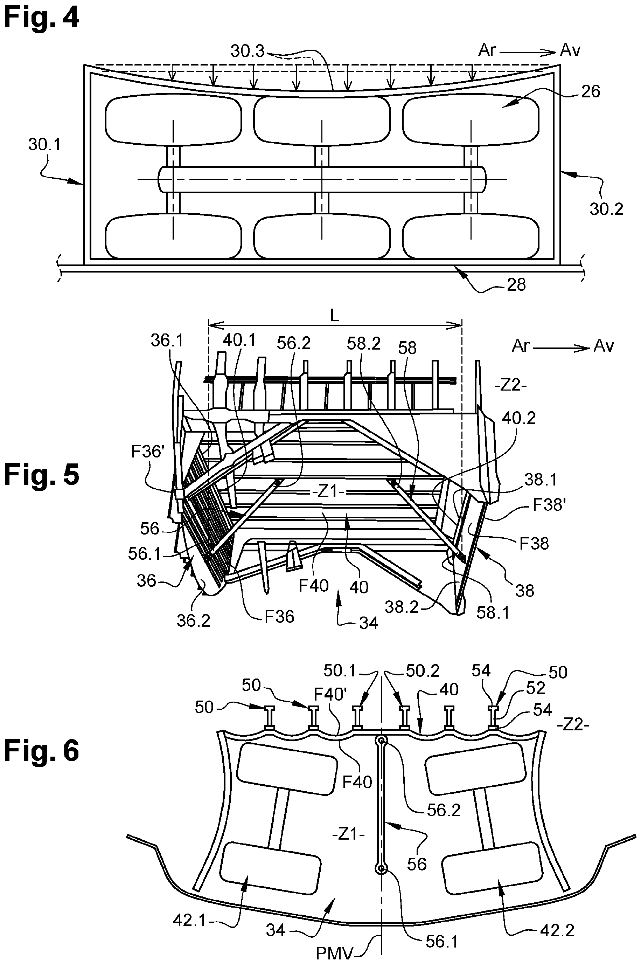

L'aéronef 10 comprend un train d'atterrissage avant 24 positionné à proximité de la pointe avant 14 ainsi que deux trains d'atterrissage principaux 26 positionnés de part et d'autre du fuselage 12, à l'arrière du caisson central de voilure 20. Chaque train d'atterrissage avant ou principal 24, 26 est configuré pour occuper une position déployée, comme illustré sur la figure 1, dans laquelle il est positionné en dehors d'une case de train, ainsi qu'une position rétractée dans laquelle il est positionné dans la case de train, comme illustré sur la figure 4.

Comme illustré sur les figures 2 à 4, le fuselage 12 comprend une case de train d'atterrissage principale 28 positionnée à l'arrière du caisson central de voilure 20 et configurée pour recevoir les deux trains d'atterrissage principaux 26 dans la position rétractée. Cette case de train d'atterrissage principale 28 comprend une paroi transversale arrière 30.1, une paroi transversale avant 30.2 ainsi qu'une paroi de fond 30.3. Certaines de ces parois, notamment la paroi transversale arrière 30.1 et la paroi de fond 30.3, forment une barrière étanche entre une première zone pressurisée, à l'intérieur du fuselage 12 et à l'extérieur de la case de train d'atterrissage principale 28, et une deuxième zone non pressurisée à l'intérieur de la case de train d'atterrissage principale 28. En raison de cette différence de pression, la paroi de fond 30.3 tend à s'incurver vers l'intérieur de la case de train d'atterrissage principale 28, comme illustré sur la figure 4. Pour limiter cette déformation, la paroi de fond 30.3 est renforcée et comprend plusieurs poutres longitudinales 32 parallèles entre elles, orientées parallèlement à la direction longitudinale et qui s'étendent de la paroi transversale arrière 30.1 jusqu'à la paroi transversale avant 30.2.

Par la suite, l'intérieur de la case de train d'atterrissage principale correspond à la deuxième zone non pressurisée. L'extérieur de la case de train correspond, entre autres, à la première zone pressurisée. Une face intérieure d'une paroi correspond à la face de la paroi orientée vers l'intérieur de la case de train d'atterrissage principale et une face extérieure d'une paroi correspond à la face de la paroi orientée vers l'extérieur de la case de train d'atterrissage principale.

Pour rigidifier la paroi de fond 30.3, une solution consiste à prévoir un grand nombre de poutres longitudinales. Cependant, cette solution n'est pas satisfaisante car elle conduit à augmenter la masse embarquée ce qui tend à pénaliser les performances de l'aéronef. De plus, malgré un nombre important de poutres longitudinales 32, la paroi de fond 30.3 a tendance à se déformer compte tenu de sa longueur (dimension prise selon la direction longitudinale).

La présente invention vise à remédier à tout ou partie des inconvénients de l'art antérieur.

A cet effet, l'invention a pour objet un aéronef comprenant deux trains d'atterrissage principaux ainsi qu'une case de train d'atterrissage principale configurée pour loger de part et d'autre d'un plan médian vertical les deux trains d'atterrissage principaux dans une position rétractée, la case de train d'atterrissage principale comprenant une paroi transversale arrière, une paroi transversale avant parallèle à la paroi transversale arrière ainsi qu'une paroi de fond perpendiculaire aux parois transversales arrière et avant et au plan médian vertical, la paroi de fond présentant un bord arrière relié à la paroi transversale arrière et un bord avant relié à la paroi transversale avant.

Selon l'invention, la case de train d'atterrissage principale comprend au moins une jambe de force présentant une première extrémité reliée par une première liaison à un premier point d'ancrage prévu sur l'une des parois transversales arrière et avant ainsi qu'une deuxième extrémité reliée par une deuxième liaison à un deuxième point d'ancrage prévu sur la paroi de fond, chaque jambe de force étant positionnée dans le plan médian vertical et distante du bord avant ou arrière.

La jambe de force permet de limiter la déformation de la paroi de fond de la case de train d'atterrissage principale.

Selon une autre caractéristique, la case de train d'atterrissage principale comprend une jambe de force arrière reliant la paroi transversale arrière et la paroi de fond ainsi qu'une jambe de force avant reliant la paroi transversale avant et la paroi de fond.

Selon une autre caractéristique, les bords arrière et avant de la paroi de fond sont séparés d'une longueur et, pour chaque jambe de force, le deuxième point d'ancrage est séparé du bord arrière ou avant de la paroi de fond d'une distance correspondant à un quart de la longueur.

Selon une autre caractéristique, au moins un des premier et deuxième points d'ancrage comprend une première partie présentant une première semelle plaquée contre une face intérieure de la paroi transversale arrière ou avant ou de la paroi de fond ainsi qu'une deuxième partie présentant une deuxième semelle plaquée contre une face extérieure de la paroi transversale arrière ou avant ou de la paroi de fond, les première et deuxième semelles étant reliées entre elles par des éléments traversant la paroi transversale arrière ou avant ou la paroi de fond.

Selon une autre caractéristique, la deuxième partie est reliée à deux poutres prévues sur la paroi transversale arrière ou la paroi de fond et positionnées de part et d'autre du plan médian vertical.

Selon une autre caractéristique, la deuxième partie comprend une première plaque, perpendiculaire au plan médian vertical et à la paroi transversale arrière ou à la paroi de fond, reliée aux poutres et à la paroi transversale arrière ou à la paroi de fond.

Selon une autre caractéristique, la deuxième partie comprend une deuxième semelle plaquée contre une face extérieure de la paroi transversale arrière ou de la paroi de fond et reliée à la première semelle de la première partie par des éléments traversant la paroi transversale arrière ou la paroi de fond.

Selon une autre caractéristique, la deuxième partie comprend une nervure de renfort, triangulaire, reliant la première plaque et la deuxième semelle, positionnée dans le plan médian vertical.

Selon une autre caractéristique, au moins un des premier et deuxième points d'ancrage comprend une troisième partie comportant une deuxième plaque, plaquée contre la première plaque de la deuxième partie et reliée à cette dernière ainsi qu'une troisième semelle plaquée contre la paroi transversale arrière ou la paroi de fond et reliée à la première semelle de la première partie par des éléments traversant la paroi transversale arrière ou la paroi de fond. Selon une autre caractéristique, la troisième partie comprend une nervure de renfort, triangulaire, reliant la deuxième plaque et la troisième semelle, positionnée dans le plan médian vertical.

Selon une autre caractéristique, chaque liaison comprend une liaison pivotante présentant un axe de pivotement perpendiculaire au plan médian vertical et un rotulage.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'une partie du fuselage de l'aéronef visible sur la figure 1,
- La figure 3 est une vue en perspective d'une case de train d'atterrissage principale vide illustrant un mode de réalisation de l'art antérieur,
- La figure 4 est une coupe longitudinale de la case de train d'atterrissage principale visible sur la figure 3, montrant une déformation d'une paroi de fond,
- La figure 5 est une vue en perspective d'une case de train d'atterrissage principale illustrant un mode de réalisation de l'invention,
- La figure 6 est une coupe transversale d'une case de train d'atterrissage principale illustrant un mode de réalisation de l'invention,
- La figure 7est une vue en perspective, depuis un premier angle de vue situé à l'extérieur de la case de train d'atterrissage principale, d'un premier point d'ancrage d'une jambe de force arrière visible sur la figure 5,
- La figure 8 est une vue en perspective, depuis un deuxième angle de vue situé à l'extérieur de la case de train d'atterrissage principale, du premier point d'ancrage de la jambe de force arrière visible sur la figure 7,
- La figure 9 est une vue en perspective, depuis un angle de vue situé à l'intérieur de la case de train d'atterrissage principale, du premier point d'ancrage de la jambe de force arrière visible sur la figure 7,
- La figure 10 est une vue en perspective, depuis un angle de vue situé à l'intérieur de la case de train d'atterrissage principale, d'un premier point d'ancrage d'une jambe de force avant visible sur la figure 5,
- La figure 11 est une vue en perspective, depuis un angle de vue situé à l'extérieur de la case de train d'atterrissage principale, du premier point d'ancrage de la jambe de force avant visible sur la figure 10,
- La figure 12 est une coupe transversale d'une partie de la case de train d'atterrissage principale montrant un deuxième point d'ancrage de la jambe de force arrière visible sur la figure 5, et
- La figure 13 est une vue en perspective, depuis un angle de vue situé à l'intérieur de la case de train d'atterrissage principale, du deuxième point d'ancrage de la jambe de force arrière visible sur la figure 12.

Selon un mode de réalisation visible sur les figures 5 et 6, une case de train d'atterrissage principale 34 comprend une paroi transversale arrière 36 perpendiculaire à un plan médian vertical PMV, une paroi transversale avant 38 parallèle à la paroi transversale arrière 36 ainsi qu'une paroi de fond 40 perpendiculaire aux parois transversales arrière et avant 36, 38 ainsi qu'au plan médian vertical PMV. La paroi de fond 40 est positionnée de manière symétrique par rapport au plan médian vertical PMV. La paroi transversale avant 38 peut faire partie d'un caisson central de voilure.

La case de train d'atterrissage principale 34 délimite une première zone Z1 configurée pour loger deux trains d'atterrissage principaux 42.1, 42.2 lorsqu'ils sont en position rétractée, positionnés de part et d'autre du plan médian vertical PMV, comme illustré sur la figure 6. La paroi de fond 40, et éventuellement au moins l'une des parois transversales arrière et avant 36, 38, sépare(nt) la première zone Z1, non pressurisée, d'une deuxième zone Z2, pressurisée, située à l'intérieur du fuselage et à l'extérieur de la case de train d'atterrissage principale 34. Selon une configuration, la paroi de fond 40 et la paroi transversale arrière 36 séparent la première zone Z1 non pressurisée de la deuxième zone Z2 pressurisée et forment une barrière étanche.

La paroi transversale arrière 36 comprend un côté supérieur 36.1 relié à la paroi de fond 40 et un côté inférieur 36.2 distant de la paroi de fond 40. La paroi transversale avant 38 comprend un côté supérieur 38.1 relié à la paroi de fond 40 et un côté inférieur 38.2 distant de la paroi de fond 40. La paroi de fond 40 comprend un bord arrière 40.1 relié au côté supérieur 36.1 de la paroi transversale arrière 36 et un bord avant 40.2 relié au côté supérieur 38.1 de la paroi transversale avant 38. La paroi de fond 40 présente une longueur L séparant les bords arrière et avant 40.1, 40.2, dimension prise selon une direction parallèle à la direction longitudinale. La paroi transversale arrière 36 comprend une face intérieure F36 orientée vers la première zone Z1 de la case de train d'atterrissage principale 34 et une face extérieure F36' opposée à la face intérieure F36. La paroi transversale avant 38 comprend une face intérieure F38 orientée vers la première zone Z1 de la case de train d'atterrissage principale 34 et une face extérieure F38' opposée à la face intérieure F38. La paroi de fond 40 comprend une face intérieure F40 orientée vers la première zone Z1 de la case de train d'atterrissage principale 34 et une face extérieure F40' opposée à la face intérieure F40.

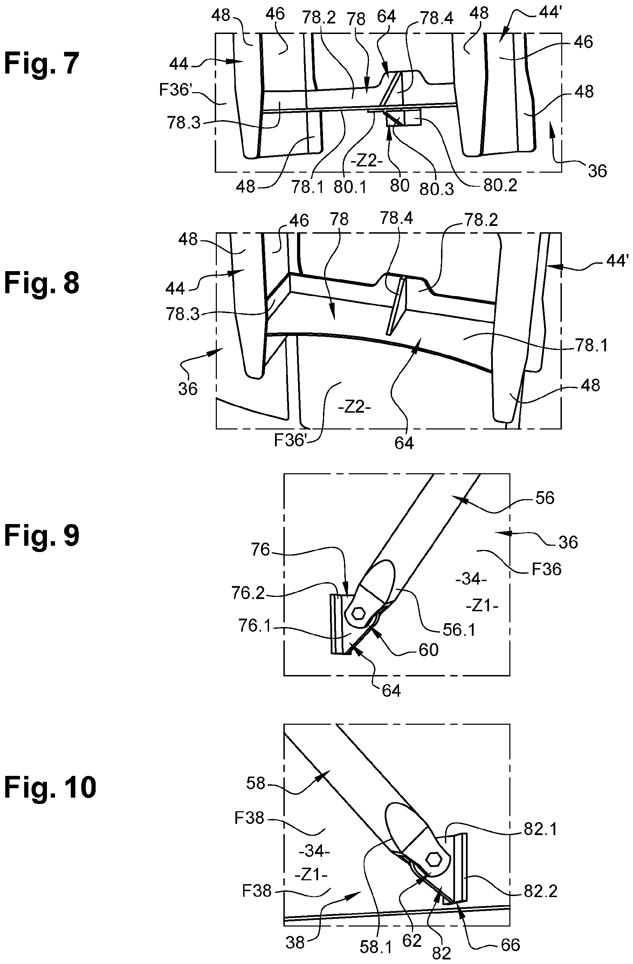

Selon une configuration visible sur la figure 7, la paroi transversale arrière 36 est renforcée et comprend des poutres verticales 44, 44' positionnées de manière symétrique par rapport au plan médian vertical PMV. Chaque poutre verticale 44, 44' a une section en I et présente une âme 46 positionnée dans un plan parallèle au plan médian vertical PMV ainsi que deux semelles 48 perpendiculaires à l'âme 46, positionnées de manière symétrique par rapport à l'âme 46, à chaque extrémité de cette dernière, l'une des semelles 48 étant plaquée contre la face extérieure F36' de la paroi transversale arrière 36. La paroi transversale arrière 36 comprend deux poutres verticales 44, 44' droite et gauche positionnées de part et d'autre du plan médian vertical PMV. L'invention n'est pas limitée à ce mode de réalisation pour les poutres verticales 44, 44'.

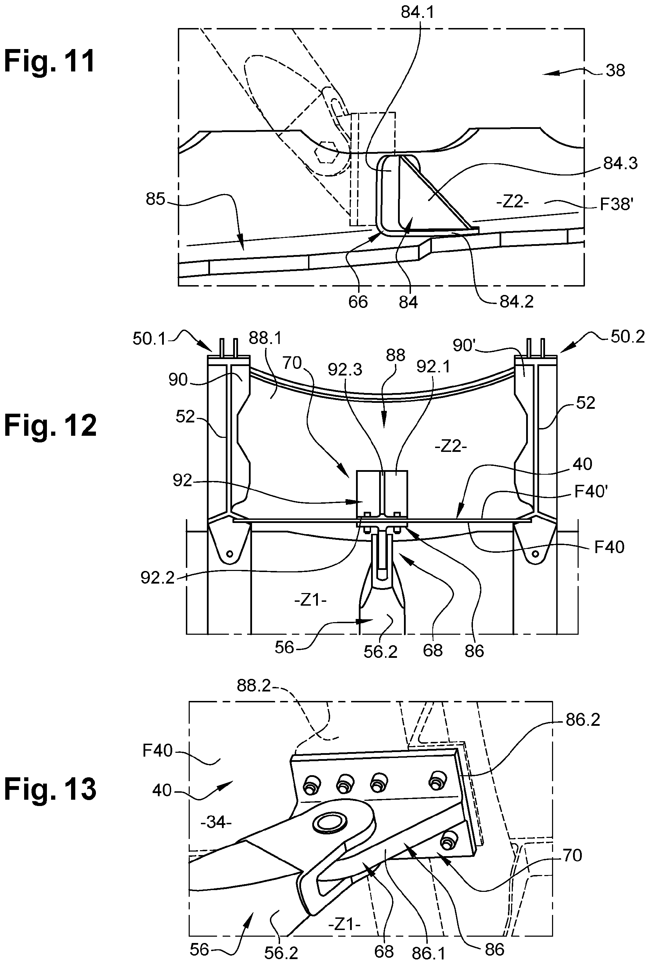

Selon une configuration visible sur les figures 6 et 12, la paroi de fond 40 est renforcée et comprend des poutres longitudinales 50, parallèles à la direction longitudinale, positionnées de manière symétrique par rapport au plan médian vertical PMV. Ces poutres longitudinales 50 sont réparties sur toute la largeur de la paroi de fond 40 (dimension prise selon la direction transversale). Chaque poutre longitudinale 50 a une section en I et présente une âme 52 positionnée dans un plan parallèle au plan médian vertical PMV ainsi que deux semelles 54 perpendiculaires à l'âme 52, positionnées de manière symétrique par rapport à l'âme 52, à chaque extrémité de cette dernière, l'une des semelles 54 étant plaquée contre la face extérieure F40' de la paroi de fond 40. La paroi de fond 40 peut être réalisée d'un seul tenant ou en plusieurs parties juxtaposées, une entre chaque couple de renforts longitudinaux 50. L'invention n'est pas limitée à ce mode de réalisation pour les poutres longitudinales 50.

La paroi de fond 40 comprend au moins deux poutres longitudinales droite et gauche 50.1, 50.2, positionnées de part et d'autre du plan médian vertical PMV, les plus proches de ce dernier.

Les parois transversales arrière et avant 36, 38, la paroi de fond 40, les poutres verticales 44, 44', les poutres longitudinales 50, 50.1, 50.2 ainsi que les trains d'atterrissage principaux 42.1, 42.2 ne sont pas plus décrits car ils peuvent être identiques à ceux de l'art antérieur.

La case de train d'atterrissage principale 34 comprend au moins une jambe de force 56, 58 reliant la paroi transversale arrière ou avant 36, 38 et la paroi de fond 40, positionnée dans le plan médian vertical PMV, distante du bord avant ou arrière 40.1, 40.2. Selon une configuration, la case de train d'atterrissage principale 34 comprend une jambe de force 56 arrière reliant la paroi transversale arrière 36 et la paroi de fond 40. Selon une autre configuration, la case de train d'atterrissage principale 34 comprend une jambe de force 56 arrière reliant la paroi transversale arrière 36 et la paroi de fond 40 ainsi qu'une jambe de force 58 avant reliant la paroi transversale avant 38 et la paroi de fond 40, les jambes de force 56, 58 arrière et avant étant positionnées dans le plan médian vertical PMV.

Chaque jambe de force 56, 58 permet de limiter la déformation de la paroi de fond 40 en cas de différences de pression importantes de part et d'autre de la paroi de fond 40.

Chaque jambe de force 56, 58 arrière ou avant comprend une première extrémité 56.1, 58.1 reliée par une première liaison 60, 62 à un premier point d'ancrage 64, 66 prévu sur la paroi transversale arrière ou avant 36, 38 ainsi qu'une deuxième extrémité 56.2, 58.2 reliée par une deuxième liaison 68 à un deuxième point d'ancrage 70 prévu sur la paroi de fond 40.

Le premier point d'ancrage 64 de la jambe de force 56 arrière est positionné à proximité du côté inférieur 36.2 de la paroi transversale arrière 36. Le premier point d'ancrage 66 de la jambe de force 58 avant est positionné à proximité du côté inférieur 38.2 de la paroi transversale avant 38.

Pour chaque jambe de force 56, 58 arrière ou avant, le deuxième point d'ancrage 70 est séparé du bord arrière ou avant 40.1, 40.2 de la paroi de fond 40 d'une distance L/4 correspondant à environ un quart de la longueur L de la base de fond 40 ou un peu moins du quart de la longueur L. Cette position des deuxièmes points d'ancrage 70 permet d'optimiser le renforcement de la paroi de fond 40.

Selon un mode de réalisation, le premier point d'ancrage 64 est relié aux poutres verticales 44, 44' de la paroi transversale arrière 36 de manière à assurer un meilleur transfert de charge entre la jambe de force arrière 56 et la paroi transversale arrière 36.

Selon une configuration, le premier point d'ancrage 64 de la jambe de force 56 arrière comprend une première partie 76, également appelée ferrure de bielle, positionnée contre la face intérieure F36 de la paroi transversale arrière 36 ainsi qu'au moins une deuxième partie 78, également appelée nervure de renfort, positionnée contre la face extérieure F36' de la paroi transversale arrière 36.

La première partie 76 comprend une âme 76.1 et une première semelle 76.2 plaquée contre la face intérieure F36 de la paroi transversale arrière 36. La deuxième partie 78 comprend une première plaque 78.1 perpendiculaire au plan médian vertical PMV et à la paroi transversale arrière 36, qui présente trois côtés jouxtant la face extérieure F36' de la paroi transversale arrière 36 et les âmes 46 des poutres verticales 44, 44' ainsi qu'une deuxième semelle 78.2 prévue au niveau d'un côté de la première plaque 78.1 et plaquée contre la face extérieure F36' de la paroi transversale arrière 36. Les première et deuxième semelles 76.2, 78.2 des première et deuxième parties 76, 78 sont reliées entre elles par des vis, des rivets ou tout autre élément de liaison analogue traversant la paroi transversale arrière 36.

La deuxième partie 78 comprend des ailes 78.3 prévues au niveau de deux côtés de la première plaque 78.1 et plaquées contre les âmes 46 des poutres verticales 44, 44'. Ces ailes 78.3 sont reliées aux âmes 46 des poutres verticales 44, 44' par des vis, des rivets ou tout autre élément de liaison analogue.

Selon un mode de réalisation, la deuxième partie 78 comprend une nervure de renfort 78.4, triangulaire, reliant la première plaque 78.1 et la deuxième semelle 78.2, positionnée dans le plan médian vertical PMV.

Selon une configuration, le premier point d'ancrage 64 de la jambe de force 56 arrière comprend une troisième partie 80, également appelée contre-ferrure, positionnée contre la face extérieure F36' de la paroi transversale arrière 36. Cette troisième partie comprend une deuxième plaque 80.1 plaquée contre la première plaque 78.1 de la deuxième partie 78 et reliée à cette dernière par des vis, des rivets ou tout autre élément de liaison analogue, ainsi qu'une troisième semelle 80.2 plaquée contre la face extérieure F36' de la paroi transversale arrière 36 et reliée à la première semelle 76.2 de la première partie 76 par des vis, des rivets ou tout autre élément de liaison analogue traversant la paroi transversale arrière 36. Selon un mode de réalisation, la troisième partie 80 comprend une nervure de renfort 80.3, triangulaire, reliant la deuxième plaque 80.1 et la troisième semelle 80.2, positionnée dans le plan médian vertical PMV.

Selon une configuration, le premier point d'ancrage 66 de la jambe de force 58 avant comprend une première partie 82, également appelée ferrure de bielle, positionnée contre la face intérieure F38 de la paroi transversale avant 38 ainsi qu'au moins une deuxième partie 84, également appelée contre-ferrure, positionnée contre la face extérieure F38' de la paroi transversale avant 38.

La première partie 82 comprend une âme 82.1 et une première semelle 82.2 plaquée contre la face intérieure F38 de la paroi transversale avant 38. La deuxième partie 84 comprend une deuxième semelle 84.1 plaquée contre la face extérieure F38' de la paroi transversale avant 38 ainsi qu'une troisième semelle 84.2, perpendiculaire au plan médian vertical PMV et à la paroi transversale avant 38, plaquée contre un renfort 85 de la paroi transversale avant 38 et reliée à ce dernier par des vis, des rivets ou tout autre élément de liaison analogue. Selon une configuration, le renfort 85 est une cornière du caisson central de voilure. Les première et deuxième semelles 82.2 84.2 des première et deuxième parties 82, 84 sont reliées entre elles par des vis, des rivets ou tout autre élément de liaison analogue traversant à la paroi transversale avant 38.

Selon un mode de réalisation, la deuxième partie 84 comprend une nervure de renfort 84.3, triangulaire, reliant les deuxième et troisième semelles 84.1, 84.2, positionnée dans le plan médian vertical PMV.

Selon un mode de réalisation, chaque deuxième point d'ancrage 70 est relié aux poutres longitudinales 50.1, 50.2 de la paroi de fond 40 de manière à assurer un meilleur transfert de charge entre la jambe de force 56, 58 arrière ou avant et la paroi de fond 40.

Selon une configuration, chaque deuxième point d'ancrage 70 comprend une première partie 86, également appelée ferrure de bielle, positionnée contre la face intérieure F40 de la paroi de fond 40 ainsi qu'au moins une deuxième partie 88, également appelée nervure de renfort, positionnée contre la face extérieure F40' de la paroi de fond 40.

La première partie 86 comprend une âme 86.1 et une première semelle 86.2 plaquée contre la face intérieure F40 de la paroi de fond 40. La deuxième partie 88 comprend une première plaque 88.1, perpendiculaire au plan médian vertical PMV et à la paroi de fond 40, qui présente trois côtés jouxtant la face extérieure F40' de la paroi de fond 40 et les âmes 52 des poutres longitudinales 50.1, 50.2' ainsi qu'une deuxième semelle 88.2, prévue au niveau d'un des trois côtés de la première plaque 88.1, plaquée contre la face extérieure F40' de la paroi de fond 40. Les âmes 52 des poutres longitudinales 50.1, 50.2 comprennent des ailettes 90, 90' reliées à la première plaque 88.1 de la deuxième partie 88 par des vis, des rivets ou tout autre élément de liaison analogue. La liaison entre la deuxième partie 88 et les poutres longitudinales 50.1, 50.2 n'est pas limitée à ce mode de réalisation.

Les première et deuxième semelles 86.2, 88.2 des première et deuxième parties 86, 88 sont reliées entre elles par des vis, des rivets ou tout autre élément de liaison analogue traversant et à la paroi de fond 40.

Selon un mode de réalisation, la deuxième partie 88 comprend une nervure de renfort, triangulaire, reliant la première plaque et la deuxième semelle, positionnée approximativement dans le plan médian vertical PMV.

Selon une configuration, chaque deuxième point d'ancrage 70 comprend une troisième partie 92, également appelée contre-ferrure, positionnée contre la face extérieure F40' de la paroi de fond 40. Cette troisième partie 92 comprend une deuxième plaque 92.1 plaquée contre la première plaque 88.1 de la deuxième partie 88 et reliée à cette dernière par des vis, des rivets ou tout autre élément de liaison analogue, ainsi qu'une troisième semelle 92.2 plaquée contre la face extérieure F40' de la paroi de fond 40, les première et troisième semelles 86.2, 92.2 des première et troisième parties 86, 92 étant reliées par des vis, des rivets ou tout autre élément de liaison analogue traversant la paroi de fond 40. Selon un mode de réalisation, la troisième partie 92 comprend une nervure de renfort 92.3, triangulaire, reliant la deuxième plaque 92.1 et la troisième semelle 92.2, positionnée approximativement dans le plan médian vertical PMV.

Quel que soit le mode de réalisation, au moins un point d'ancrage 64, 66, 70 comprend une première partie 76, 82, 86 qui présente une première semelle 76.2, 82.2, 86.2 plaquée contre une face intérieure F36, F38, F40 d'une paroi transversale arrière ou avant ou d'une paroi de fond 36, 38, 40 de la case de train d'atterrissage principale 34 ainsi qu'une deuxième partie 78, 84, 88 qui présente une deuxième semelle 78.2, 84.2, 88.2 plaquée contre une face extérieure F36', F38', F40' de la paroi transversale arrière ou avant ou de la paroi de fond 36, 38, 40 de la case de train d'atterrissage principale 34, les première et deuxième semelles 76.2, 78.2, 82.2, 84.2, 86.2, 88.2 étant reliées entre elles par des éléments traversant la paroi transversale arrière ou avant, de fond 36, 38, 40. Cette configuration permet d'assurer une bonne étanchéité au niveau de chaque point d'ancrage 64, 66, 70.

Lorsque la paroi transversale arrière 36 ou la paroi de fond comprend deux poutres 44, 44', 50.1, 50.2 disposées de part et d'autre du plan médian vertical PMV, la deuxième partie 78, 88 comprend une première plaque 78.1, 88.1 reliée aux deux poutres 44, 44', 50.1, 50.2 perpendiculaire à la deuxième semelle 78.2, 88.2.

Selon un mode de réalisation, chaque liaison 60, 62, 68 comprend une liaison pivotante et/ou rotule 94 présentant un axe de pivotement perpendiculaire au plan médian vertical PMV. Selon une configuration, les premières et deuxièmes extrémités 56.1, 58.1, 56.2, 58.2 comprennent chacune une chape qui présente deux branches, parallèles au plan médian vertical PMV et faiblement espacées entre elles, configurées pour loger entre elles l'âme 76.1, 82,1, 86.1 d'un des premier, deuxième, troisième et quatrième points d'ancrage 60, 62, 68 et se trouve positionnée dans le plan médian vertical PMV. Pour chaque liaison pivotante, chaque branche de la chape et l'âme comprennent des alésages alignés en fonctionnement et configurés pour loger un axe de pivotement cylindrique. Avantageusement, la liaison pivotante 94 comprend un rotulage. Cette configuration permet de compenser un défaut d'alignement entre les âmes 76.1, 82,1, 86.1 des différents points d'ancrage 60, 62, 68.

## Revendications

1. Aéronef comprenant deux trains d'atterrissage principaux (42.1, 42.2) ainsi qu'une case de train d'atterrissage principale (34) configurée pour loger de part et d'autre d'un plan médian vertical (PMV) les deux trains d'atterrissage principaux (42.1, 42.2) dans une position rétractée, la case de train d'atterrissage principale (34) comprenant une paroi transversale arrière (36), une paroi transversale avant (38) parallèle à la paroi transversale arrière (36) ainsi qu'une paroi de fond (40) perpendiculaire aux parois transversales arrière et avant (36, 38) et au plan médian vertical (PMV), la paroi de fond (40) présentant un bord arrière (40.1) relié à la paroi transversale arrière (36) et un bord avant (40.2) relié à la paroi transversale avant (38), **caractérisé en ce que** la case de train d'atterrissage principale (34) comprend au moins une jambe de force (56, 58) présentant une première extrémité (56.1, 58.1) reliée par une première liaison (60, 62) à un premier point d'ancrage (64, 66) prévu sur l'une des parois transversales arrière et avant (36, 38) ainsi qu'une deuxième extrémité (56.2, 58.2) reliée par une deuxième liaison (68) à un deuxième point d'ancrage (70) prévu sur la paroi de fond (40), chaque jambe de force (56, 58) étant positionnée dans le plan médian vertical (PMV) et distante du bord avant ou arrière (40.1, 40.2).

2. Aéronef selon la revendication 1, **caractérisé en ce que** la case de train d'atterrissage principale (34) comprend une jambe de force (56) arrière reliant la paroi transversale arrière (36) et la paroi de fond (40) ainsi qu'une jambe de force (58) avant reliant la paroi transversale avant (38) et la paroi de fond (40).

3. Aéronef selon l'une des revendications précédentes, **caractérisé en ce que** les bords arrière et avant (40.1, 40.2) de la paroi de fond (40) sont séparés d'une longueur (L) et **en ce que**, pour chaque jambe de force (56, 58), le deuxième point d'ancrage (70) est séparé du bord arrière ou avant (40.1, 40.2) de la paroi de fond (40) d'une distance (L/4) correspondant à un quart de la longueur (L).

4. Aéronef selon l'une des revendications précédentes, **caractérisé en ce qu'**au moins un des premier et deuxième points d'ancrage (64, 66, 70) comprend une première partie (76, 82, 86) présentant une première semelle (76.2, 82.2, 86.2) plaquée contre une face intérieure (F36, F38, F40) de la paroi transversale arrière ou avant (36, 38) ou de la paroi de fond (40) ainsi qu'une deuxième partie (78, 84, 88) présentant une deuxième semelle (78.2, 84.2, 88.2) plaquée contre une face extérieure (F36', F38', F40') de la paroi transversale arrière ou avant (36, 38) ou de la paroi de fond (40), les première et deuxième semelles (76.2, 78.2, 82.2, 84.2, 86.2, 88.2) étant reliées entre elles par des éléments traversant la paroi transversale arrière ou avant (36, 38) ou la paroi de fond (40).

5. Aéronef selon la revendication précédente, **caractérisé en ce que** la deuxième partie (78, 88) est reliée à deux poutres (44, 44', 50.1, 50.2) prévues sur la paroi transversale arrière (36) ou la paroi de fond (40) et positionnées de part et d'autre du plan médian vertical (PMV).

6. Aéronef selon la revendication précédente, **caractérisé en ce que** la deuxième partie (78, 88) comprend une première plaque (78.1, 88.1), perpendiculaire au plan médian vertical (PMV) et à la paroi transversale arrière (36) ou à la paroi de fond (40), reliée aux poutres (44, 44', 50.1, 50.2) et à la paroi transversale arrière (36) ou à la paroi de fond (40).

7. Aéronef selon la revendication précédente, **caractérisé en ce que** la deuxième partie (78, 88) comprend une deuxième semelle (78.2, 88.2) plaquée contre une face extérieure (F36', F40') de la paroi transversale arrière (36) ou de la paroi de fond (40) et reliée à la première semelle (76.2, 86.2) de la première partie (76, 86) par des éléments traversant la paroi transversale arrière (36) ou la paroi de fond (40).

8. Aéronef selon la revendication précédente, **caractérisé en ce que** la deuxième partie (78) comprend une nervure de renfort (78.4), triangulaire, reliant la première plaque (78.1) et la deuxième semelle (78.2), positionnée dans le plan médian vertical (PMV).

9. Aéronef selon l'une des revendications 6 à 8, **caractérisé en ce qu'**au moins un des premier et deuxième points d'ancrage (64, 70) comprend une troisième partie (80, 92) comportant une deuxième plaque (80.1, 92.1), plaquée contre la première plaque (78.1, 88.1) de la deuxième partie (78, 88) et reliée à cette dernière, ainsi qu'une troisième semelle (80.2, 92.2) plaquée contre la paroi transversale arrière (36) ou la paroi de fond (40) et reliée à la première semelle (76.2, 86.2) de la première partie (76, 86) par des éléments traversant la paroi transversale arrière (36) ou la paroi de fond (40).

10. Aéronef selon la revendication précédente, **caractérisé en ce que** la troisième partie (80) comprend une nervure de renfort (80.3), triangulaire, reliant la deuxième plaque (80.1) et la troisième semelle (80.2), positionnée dans le plan médian vertical (PMV).

11. Aéronef selon l'une des revendications précédentes, **caractérisé en ce que** chaque liaison (60, 62, 68) comprend une liaison pivotante et/ou rotule (94) présentant un axe de pivotement perpendiculaire au plan médian vertical (PMV).

## Patentansprüche

1. Luftfahrzeug mit zwei Hauptfahrwerken (42.1, 42.2) sowie einem Hauptfahrwerksschacht (34), der dazu eingerichtet ist, die beiden Hauptfahrwerke (42.1, 42.2) beidseits einer vertikalen Mittelebene (PMV) in einer eingefahrenen Position aufzunehmen, wobei der Hauptfahrwerksschacht (34) eine hintere Querwand (36), eine zur hinteren Querwand (36) parallele vordere Querwand (38) sowie eine im rechten Winkel zur hinteren und vorderen Querwand (36, 38) und zur vertikalen Mittelebene (PMV) ausgerichtete Bodenwand (40) aufweist, wobei die Bodenwand (40) einen hinteren Rand (40.1) aufweist, der mit der hinteren Querwand (36) verbunden ist, und einen vorderen Rand (40.2), der mit der vorderen Querwand (38) verbunden ist, **dadurch gekennzeichnet, dass** der Hauptfahrwerksschacht (34) wenigstens eine Strebe (56, 58) aufweist, die ein erstes Ende (56.1, 58.1) aufweist, das über eine erste Verbindung (60, 62) mit einem ersten Verankerungspunkt (64, 66) verbunden ist, der an einer der hinteren oder vorderen Querwände (36, 38) vorgesehen ist, sowie ein zweites Ende (56.2, 58.2) aufweist, das über eine zweite Verbindung (68) mit einem zweiten Verankerungspunkt (70) verbunden ist, der an der Bodenwand (40) vorgesehen ist, wobei jede Strebe (56, 58) in der vertikalen Mittelebene (PMV) angeordnet und von dem vorderen oder hinteren Rand (40.1, 40.2) beabstandet ist.

2. Luftfahrzeug nach Anspruch 1, **dadurch gekennzeichnet, dass** der Hauptfahrwerksschacht (34) eine hintere Strebe (56) aufweist, die die hintere Querwand (36) und die Bodenwand (40) verbindet, sowie eine vordere Strebe (58) aufweist, die die vordere Querwand (38) und die Bodenwand (40) verbindet.

3. Luftfahrzeug nach einem der vorhergehenden Ansprüche, **dadurch gekennzeichnet, dass** der hintere und vordere Rand (40.1, 40.2) der Bodenwand (40) um eine Strecke (L) voneinander beabstandet sind und dass der zweite Verankerungspunkt (70) für jede Strebe (56, 58) von dem hinteren oder vorderen Rand (40.1, 40.2) der Bodenwand (40) durch einen Abstand (L/4) getrennt ist, der einem Viertel der Strecke (L) entspricht.

4. Luftfahrzeug nach einem der vorhergehenden Ansprüche, **dadurch gekennzeichnet, dass** wenigstens einer der ersten und zweiten Verankerungspunkte (64, 66, 70) ein erstes Teil (76, 82, 86) mit einer ersten Grundplatte (76.2, 82.2, 86.2) aufweist, die gegen eine Innenfläche (F36, F38, F40) der hinteren oder vorderen Querwand (36, 38) oder der Bodenwand (40) angesetzt ist, sowie ein zweites Teil (78, 84, 88) mit einer zweiten Grundplatte (78.2, 84.2, 88.2) aufweist, die gegen eine Außenfläche (F36', F38', F40') der hinteren oder vorderen Querwand (36, 38) oder der Bodenwand (40) angesetzt ist, wobei die erste und die zweite Grundplatte (76.2, 78.2, 82.2, 84.2, 86.2, 88.2) durch Elemente miteinander verbunden sind, die durch die hintere oder vordere Querwand (36, 38) oder die Bodenwand (40) hindurchgehen.

5. Luftfahrzeug nach dem vorhergehenden Anspruch,
**dadurch gekennzeichnet, dass** das zweite Teil (78, 88) mit zwei Trägern (44, 44', 50.1, 50.2) verbunden ist, die an der hinteren Querwand (36) oder der Bodenwand (40) vorgesehen sind und beidseits der vertikalen Mittelebene (PMV) angeordnet sind.

6. Luftfahrzeug nach dem vorhergehenden Anspruch,
**dadurch gekennzeichnet, dass** das zweite Teil (78, 88) eine erste Platte (78.1, 88.1) aufweist, die im rechten Winkel zur vertikalen Mittelebene (PMV) und zur hinteren Querwand (36) oder zur Bodenwand (40) verläuft und mit den Trägern (44, 44', 50.1, 50.2) und der hinteren Querwand (36) oder der Bodenwand (40) verbunden ist.

7. Luftfahrzeug nach dem vorhergehenden Anspruch,
**dadurch gekennzeichnet, dass** das zweite Teil (78, 88) eine zweite Grundplatte (78.2, 88.2) aufweist, die gegen eine Außenfläche (F36', F40') der hinteren Querwand (36) oder der Bodenwand (40) angesetzt ist und mit der ersten Grundplatte (76.2, 86.2) des ersten Teils (76, 86) durch Elemente verbunden ist, die durch die hintere Querwand (36) oder die Bodenwand (40) hindurchgehen.

8. Luftfahrzeug nach dem vorhergehenden Anspruch,
**dadurch gekennzeichnet, dass** das zweite Teil (78) eine dreieckige Verstärkungsrippe (78.4) aufweist, die die erste Platte (78.1) und die zweite Grundplatte (78.2) verbindet und in der vertikalen Mittelebene (PMV) angeordnet ist.

9. Luftfahrzeug nach einem der Ansprüche 6 bis 8,
**dadurch gekennzeichnet, dass** wenigstens einer der ersten und zweiten Verankerungspunkte (64, 70) ein drittes Teil (80, 92) mit einer zweiten Platte (80.1, 92.1) aufweist, die gegen die erste Platte (78.1, 88.1) des zweiten Teils (78, 88) angesetzt ist und mit diesem letzteren verbunden ist, sowie mit einer dritten Grundplatte (80.2, 92.2), die gegen die hintere Querwand (36) oder die Bodenwand (40) angesetzt ist und mit der ersten Grundplatte (76.2, 86.2) des ersten Teils (76, 86) durch Elemente verbunden ist, die durch die hintere Querwand (36) oder die Bodenwand (40) hindurchgehen.

10. Luftfahrzeug nach dem vorhergehenden Anspruch,
**dadurch gekennzeichnet, dass** das dritte Teil (80) eine dreieckige Verstärkungsrippe (80.3) aufweist, die die zweite Platte (80.1) und die dritte Grundplatte (80.2) verbindet und in der vertikalen Mittelebene (PMV) angeordnet ist.

11. Luftfahrzeug nach einem der vorhergehenden Ansprüche, **dadurch gekennzeichnet, dass** jede Verbindung (60, 62, 68) eine Schwenk- und/oder Kugelgelenkverbindung (94) mit einer Schwenkachse im rechten Winkel zur vertikalen Mittelebene (PMV) aufweist.

## Claims

1. Aircraft comprising two main landing gears (42.1, 42.2) and also a main landing gear bay (34) configured to house, on either side of a vertical median plane (PMV), the two main landing gears (42.1, 42.2) in a retracted position, the main landing gear bay (34) comprising a rear transverse wall (36), a front transverse wall (38) that is parallel to the rear transverse wall (36) and also an end wall (40) that is perpendicular to the rear and front transverse walls (36, 38) and to the vertical median plane (PMV), the end wall (40) having a rear edge (40.1) that is connected to the rear transverse wall (36) and a front edge (40.2) that is connected to the front transverse wall (38), wherein the main landing gear bay (34) comprises at least one strut (56, 58) having a first end (56.1, 58.1) that is connected by a first connection (60, 62) to a first anchor point (64, 66) provided on one of the rear and front transverse walls (36, 38) and also a second end (56.2, 58.2) that is connected by a second connection (68) to a second anchor point (70) provided on the end wall (40), each strut (56, 58) being positioned in the vertical median plane (PMV) and at a distance from the front or rear edge (40.1, 40.2).

2. Aircraft as claimed in claim 1, wherein the main landing gear bay (34) comprises a rear strut (56) connecting the rear transverse wall (36) and the end wall (40) and also a front strut (58) connecting the front transverse wall (38) and the end wall (40).

3. Aircraft as claimed in either of the preceding claims, wherein the rear and front edges (40.1, 40.2) of the end wall (40) are separated by a length (L) and wherein, for each strut (56, 58), the second anchor point (70) is separated from the rear or front edge (40.1, 40.2) of the end wall (40) by a distance (L/4) corresponding to a quarter of the length (L).

4. Aircraft as claimed in one of the preceding claims, wherein at least one of the first and second anchor points (64, 66, 70) comprises a first part (76, 82, 86) having a first flange (76.2, 82.2, 86.2) pressed against an inner face (F36, F38, F40) of the rear or front transverse wall (36, 38) or of the end wall (40) and also a second part (78, 84, 88) having a second flange (78.2, 84.2, 88.2) pressed against an outer face (F36', F38', F40') of the rear or front transverse wall (36, 38) or of the end wall (40), the first and second flanges (76.2, 78.2, 82.2, 84.2, 86.2, 88.2) being connected to each other by elements that pass through the rear or front transverse wall (36, 38) or the end wall (40).

5. Aircraft as claimed in the preceding claim, wherein the second part (78, 88) is connected to two beams (44, 44', 50.1, 50.2) provided on the rear transverse wall (36) or the end wall (40) and positioned on either side of the vertical median plane (PMV).

6. Aircraft as claimed in the preceding claim, wherein the second part (78, 88) comprises a first plate (78.1, 88.1), which is perpendicular to the vertical median plane (PMV) and to the rear transverse wall (36) or to the end wall (40), connected to the beams (44, 44', 50.1, 50.2) and to the rear transverse wall (36) or to the end wall (40).

7. Aircraft as claimed in the preceding claim, wherein the second part (78, 88) comprises a second flange (78.2, 88.2) pressed against an outer face (F36', F40') of the rear transverse wall (36) or of the end wall (40) and connected to the first flange (76.2, 86.2) of the first part (76, 86) by elements that pass through the rear transverse wall (36) or the end wall (40).

8. Aircraft as claimed in the preceding claim, wherein the second part (78) comprises a reinforcing rib (78.4), which is triangular, connecting the first plate (78.1) and the second flange (78.2), positioned in the vertical median plane (PMV).

9. Aircraft as claimed in one of claims 6 to 8, wherein at least one of the first and second anchor points (64, 70) comprises a third part (80, 92) having a second plate (80.1, 92.1), which is pressed against the first plate (78.1, 88.1) of the second part (78, 88) and connected to the latter, and also a third flange (80.2, 92.2) pressed against the rear transverse wall (36) or the end wall (40) and connected to the first flange (76.2, 86.2) of the first part (76, 86) by elements that pass through the rear transverse wall (36) or the end wall (40).

10. Aircraft as claimed in the preceding claim, wherein the third part (80) comprises a reinforcing rib (80.3), which is triangular, connecting the second plate (80.1) and the third flange (80.2), positioned in the vertical median plane (PMV).

11. Aircraft as claimed in one of the preceding claims, wherein each connection (60, 62, 68) comprises a pivoting and/or ball joint connection (94) having a pivot axis perpendicular to the vertical median plane (PMV).
